# EUROPÄISCHE PATENTSCHRIFT

(11) **EP 3 074 616 B1**
(45) Veröffentlichungstag und Bekanntmachung des Hinweises auf die Patenterteilung: **27.09.2017**
(21) Anmeldenummer: 14798755.6
(22) Anmeldetag: 06.11.2014
(51) Int. Cl.: B60K 13/04, B62J 11/00, B62J 37/00, B62K 11/02, F01N 1/00, F01N 13/18, F01N 13/16

(54) **VORRICHTUNG ZUR AUFNAHME EINES ENDSCHALLDÄMPFERS EINES ZWEIRADS**
DEVICE FOR ATTACHMENT OF A REAR SILENCER FOR A TWO-WHEEL VEHICLE
DISPOSITIF D'ATTACHE D'UN SILENCIEUX ARRIÈRE D'UN VÉHICULE À DEUX ROUES

(30) Priorität: 29.11.2013 DE 102013224562
(43) Veröffentlichungstag der Anmeldung: 05.10.2016
(73) Patentinhaber: Bayerische Motoren Werke Aktiengesellschaft, 80809 München (DE)
(72) Erfinder: DRESSLER, Matthias, 80993 Muenchen (DE); SELINGER, Stefan, 80637 München (DE); SIEVERS-PAULSEN, Johann, 85354 Freising (DE)
(86) Internationale Anmeldenummer: PCT/EP2014/073915
(87) Internationale Veröffentlichungsnummer: WO 2015/078678

(56) Entgegenhaltungen:
- EP-A1- 2 105 586
- JP-A- H11 280 460
- US-A1- 2012 325 578

## Beschreibung

Die Erfindung betrifft eine Vorrichtung zur Aufnahme eines Endschalldämpfers eines Zweirads, insbesondere eines Motorrads.

Der Endschalldämpfer der Auspuffanlage eines Motorrads ist üblicherweise an dessen Rahmenkonstruktion befestigt, genauer gesagt an einem Rahmenteil am Heck des Motorrads.

Aus der EP 2 105 586 A1 ist eine Vorrichtung zur Aufnahme eines Endschalldämpfers mit den Merkmalen des Oberbegriffs des Anspruchs 1 bekannt. Der Endschalldämpfer wird von einer Befestigungsteil aus Kunststoff gehalten, welches wiederum über die Hinterachse und den Stoßdämpfer an den Motorradrahmen befestigt.

Aufgabe der Erfindung ist es, eine alternative Halterung für den Endschalldämpfer eines Zweirads anzugeben, die insgesamt kostengünstiger und flexibler ist.

Gelöst wird diese Aufgabe durch eine Vorrichtung zur Aufnahme eines Endschalldämpfers eines Zweirads mit den Merkmalen des Anspruchs 1. Vorteilhafte und zweckmäßige Ausgestaltungen der erfindungsgemäßen Vorrichtung sind in den Unteransprüchen angegeben.

Die erfindungsgemäße Vorrichtung dient zur Aufnahme eines Endschalldämpfers eines Zweirads, insbesondere eines Motorrads, und umfasst ein an einem Strukturbauteil des Zweirads befestigbares Aufnahmeteil. In dem Aufnahmeteil wird der Endschalldämpfer gehalten. Gemäß der Erfindung ist das Aufnahmeteil ein Kunststoffteil.

Die Erfindung beruht auf der Erkenntnis, dass für die Aufnahme des Endschalldämpfers nicht zwingend ein (metallisches) Rahmenteil erforderlich ist. Überraschenderweise hat sich herausgestellt, dass es möglich ist, mit einem geeigneten Kunststoff, der eine ausreichende Stabilität und gegebenenfalls Hitzebeständigkeit aufweist, eine für ein Zweirad geeignete Aufnahme für den Endschalldämpfer herzustellen und so in den Fahrzeugaufbau zu integrieren, dass die typischen Anforderungen an eine solche Aufnahme erfüllt werden können. Unter einem Kunststoffteil im Sinne der Erfindung sollen auch Teile aus faserverstärktem Kunststoff verstanden werden.

Die Erfindung hat den Vorteil, dass durch die Aufnahme des Endschalldämpfers in einem Kunststoffteil ein Rahmenteil eingespart werden kann. Zudem ist ein Kunststoffteil mittels etablierter Verfahren (Spritzguss etc.) schnell und kostengünstig in nahezu beliebiger Form in großen Stückzahlen herstellbar.

Vorzugsweise ist das Aufnahmeteil aus Kunststoff an einer Rahmenkonstruktion des Zweirads befestigbar. Dadurch kann ein stabiler und sicherer Halt des Aufnahmeteils gewährleistet werden.

Gemäß der Erfindung ist das Aufnahmeteil als Funktionsbauteil konzipiert, das über die Halterung des Endschalldämpfers hinausgehende Funktionen erfüllt. Das bedeutet, dass das Kunststoffteil neben der tragenden Funktion als Strukturbauteil weitere Aufgaben übernehmen kann, sodass die Anzahl der Bauteile insgesamt reduziert werden kann. Dadurch ergeben sich weitere Vorteile in Bezug auf Gewicht, Toleranzen, Kosten, Montageaufwand und Logistik.

Als Aufnahmeteil wird gemäß der Erfindung ein ansonsten als Helmfach des Motorrads dienendes Kunststoffteil genutzt. Da das Helmfach eines Motorrads stabil am Rahmen gehalten und üblicherweise genau über dem Endschalldämpfer angeordnet ist, bietet sich für den erfindungsgemäßen Zweck eine Verbindung dieser beiden Bauteile an.

Darüber hinaus kann das erfindungsgemäße Aufnahmeteil z. B. integrierte Luftführungen aufweisen. So kann das Aufnahmeteil aerodynamisch optimiert werden. "Integriert" ist hier und im Folgenden so zu verstehen, dass das Aufnahmeteil so geformt ist, dass es die zusätzliche Funktion grundsätzlich selbst erfüllt. Selbstverständlich können aber im Zusammenhang mit der jeweiligen Funktion noch weitere Bauteile zur Ergänzung vorgesehen sein.

Das Aufnahmeteil kann auch integrierte Kabel- und/oder Schlauchbefestigungen aufweisen. Dies ist bei einem Rahmenteil nicht oder nur mit großem Aufwand realisierbar, während eine entsprechende Formgebung bei einem Kunststoffteil problemlos möglich ist.

Gemäß einem weiteren Aspekt der Erfindung weist das Aufnahmeteil stoßabsorbierende Eigenschaften auf. Anders als ein Rahmenteil kann das Aufnahmeteil aus Kunststoff so ausgelegt werden, dass es im Falle eines Aufpralls eine Knautschzone bietet, um den Aufprall durch Energieumwandlung zu dämpfen.

Vorteilhaft können Befestigungsmittel eingespart werden, indem das Aufnahmeteil wenigstens einen integrierten Befestigungsabschnitt zur Befestigung eines weiteren Fahrzeugbauteils aufweist.

Eine weitere Zusatzfunktion, die das erfindungsgemäße Aufnahmeteil erfüllen kann, ist der Schutz eines anderen Fahrzeugbauteils. Hierzu ist ein in das Aufnahmeteil integrierter Schutzabschnitt vorgesehen.

Aufgrund der im Vergleich zu Metallrahmenteilen höheren Gestaltungsfreiheit ist es ohne großen Mehraufwand möglich, die oben genannten Funktionen durch entsprechende Formgebung im Kunststoff-Aufnahmeteil zu realisieren.

Gemäß einer bevorzugten Ausführungsform der Erfindung weist das Aufnahmeteil eine vorzugsweise als Hohlprofil ausgebildete, V-förmige Aufnahme mit einem Endabschnitt auf, der durch eine Längsaussparung geteilt ist und von einer Queröffnung durchsetzt ist. In die Längsaussparung ragt ein plattenartiger Befestigungsabschnitt des Endschalldämpfers mit einem Loch hinein, der mit einem Befestigungsmittel, insbesondere mit einer Schraube und einer Mutter, an der Aufnahme befestigt ist. In das Loch des Befestigungsabschnitts ist vorzugsweise eine Hülse eingesetzt, in welche wiederum eine Gummitülle mit einem darin aufgenommenen Distanzstück eingesetzt ist.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine Seitenansicht einer erfindungsgemäßen Vorrichtung zur Aufnahme eines Endschalldämpfers;
- Figur 2 eine Vorderansicht der Vorrichtung aus Figur 1 im Detail; und
- Figur 3 eine Explosionsansicht der Vorrichtung aus Figur 1 im Detail.

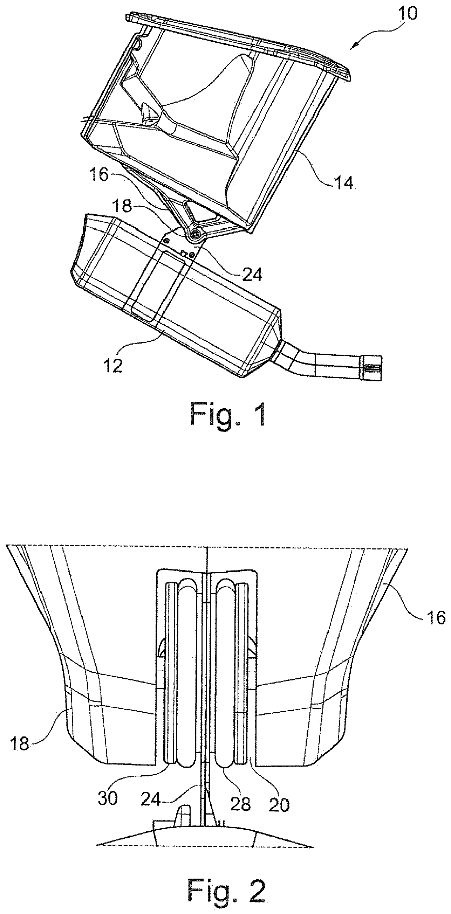

In Figur 1 ist eine Vorrichtung 10 zur Aufnahme eines Endschalldämpfers 12 eines Motorrads dargestellt. Die Vorrichtung 10 umfasst ein Aufnahmeteil 14 des Motorrads, hier in Form eines Helmfachs, aus Kunststoff. Das Aufnahmeteil 14 ist mit dem Endschalldämpfer 12 verbunden. Das Aufnahmeteil 14 selbst ist wiederum fest mit einem (nicht gezeigten) Strukturbauteil des Motorrads, wie etwa einem Rahmenteil, verbunden.

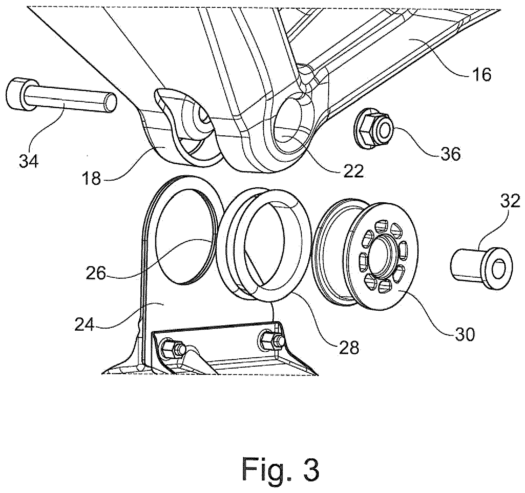

Die Verbindung des Endschalldämpfers 12 mit dem Aufnahmeteil 14 und die verwendeten Teile gemäß dem dargestellten Ausführungsbeispiel sind im Detail in den Figuren 2 und 3 zu sehen. Das Aufnahmeteil 14 weist eine abstehende, als Hohlprofil ausgebildete V-förmige Aufnahme 16 auf, die an ihrem exponierten Endabschnitt 18 durch eine Längsaussparung 20 geteilt ist. Der Endabschnitt 18 ist von einer Queröffnung 22 durchsetzt.

In die Längsaussparung 20 der Aufnahme 16 ragt ein plattenartiger Befestigungsabschnitt 24 des Endschalldämpfers 12, der einstückig mit dem Endschalldämpfer 12 oder als mit diesem verbundenes separates Bauteil ausgeführt sein kann. Der Befestigungsabschnitt 24 hat ein Loch 26, in das eine Hülse 28 aus einem elastischen Material eingesetzt ist. In die Hülse 28 ist wiederum eine Gummitülle 30 mit einem darin aufgenommenen Distanzstück 32 eingesetzt. Die Gummitülle 30 dient als Entkopplungselement, um die Übertragung von mechanischen Schwingungen zwischen dem Endschalldämpfer 12 und dem Aufnahmeteil 14 zu unterbinden. Außerdem kann die Gummitülle 30 als Längenausgleichstülle ausgeführt sein (nicht gezeigt).

Mittels einer in die Queröffnung 22 eingeführten, die Gummitülle 30 und das Distanzstück 32 durchdringenden Schraube 34 und einer Mutter 36 wird die Verbindung zwischen dem Endschalldämpfer 12 und der Aufnahme 16 des Aufnahmeteils 14 fixiert.

Die erfindungsgemäße Vorrichtung zur Aufnahme eines Endschalldämpfers wurde konkret am Beispiel eines Helmfachs illustriert und erläutert. Das Aufnahme- teil 14 kann weitere Funktionen erfüllen, beispielsweise kann es integrierte Luftführungen, integrierte Kabel- und/oder Schlauchbefestigungen, einen integrierten Befestigungsabschnitt zur Befestigung eines weiteren Fahrzeugbauteils und/oder einen integrierten Schutzabschnitt zum Schutz eines weiteren Fahrzeugbauteils aufweisen. Das Aufnahmeteil 14 kann als Kunststoffbauteil zudem als stoßabsorbierendes Element ausgelegt sein.

### Bezugszeichenliste

- 10: Vorrichtung
- 12: Endschalldämpfer
- 14: Aufnahmeteil
- 16: Aufnahme
- 18: Endabschnitt
- 20: Längssaussparung
- 22: Queröffnung
- 24: Befestigungsabschnitt
- 26: Loch
- 28: Hülse
- 30: Gummitülle
- 32: Distanzstück
- 34: Schraube
- 36: Mutter

## Patentansprüche

1. Vorrichtung (10) zur Aufnahme eines Endschalldämpfers (12) eines Zweirads, insbesondere eines Motorrads, mit einem an einem Strukturbauteil des Zweirads befestigbaren Aufnahmeteil (14), mit dem der Endschalldämpfer (12) gehalten wird, wobei das Aufnahmeteil (14) ein Kunststoffteil ist und wobei das Aufnahmeteil (14) ein Funktionsbauteil ist, das über die Halterung des Endschalldämpfers (12) hinausgehende Funktionen erfüllt, **dadurch gekennzeichnet, dass** das Aufnahmeteil (14) ein Helmfach ist.

2. Vorrichtung (10) nach Anspruch 1, **dadurch gekennzeichnet, dass** das Aufnahmeteil (14) an einer Rahmenkonstruktion des Zweirads befestigbar ist.

3. Vorrichtung (10) nach Anspruch 1 oder 2, **dadurch gekennzeichnet, dass** das Aufnahmeteil (14) integrierte Luftführungen aufweist.

4. Vorrichtung (10) nach einem der vorhergehenden Ansprüche, **dadurch gekennzeichnet, dass** das Aufnahmeteil (14) integrierte Kabel- und/oder Schlauchbefestigungen aufweist.

5. Vorrichtung (10) nach einem der vorhergehenden Ansprüche, **dadurch gekennzeichnet, dass** das Aufnahmeteil (14) stoßabsorbierende Eigenschaften aufweist.

6. Vorrichtung (10) nach einem der vorhergehenden Ansprüche, **dadurch gekennzeichnet, dass** das Aufnahmeteil (14) wenigstens einen integrierten Befestigungsabschnitt zur Befestigung eines weiteren Fahrzeugbauteils aufweist.

7. Vorrichtung (10) nach einem der vorhergehenden Ansprüche, **dadurch gekennzeichnet, dass** das Aufnahmeteil (14) einen integrierten Schutzabschnitt zum Schutz eines weiteren Fahrzeugbauteils aufweist.

8. Vorrichtung (10) nach einem der vorhergehenden Ansprüche, **dadurch gekennzeichnet, dass** das Aufnahmeteil (14) eine vorzugsweise als Hohlprofil ausgebildete, V-förmige Aufnahme (16) mit einem Endabschnitt (18) aufweist, der durch eine Längsaussparung (20) geteilt ist und von einer Queröffnung (22) durchsetzt ist, wobei in die Längsaussparung (20) ein plattenartiger Befestigungsabschnitt (24) des Endschalldämpfers (12) mit einem Loch (26) hineinragt, der mit einem Befestigungsmittel, insbesondere mit einer Schraube (34) und einer Mutter (36), an der Aufnahme befestigt ist, wobei in das Loch (26) des Befestigungsabschnitts (24) vorzugsweise eine Hülse (28) eingesetzt ist, in welche wiederum eine Gummitülle (30) mit einem darin aufgenommenen Distanzstück (32) eingesetzt ist.

## Claims

1. A device (10) for accommodating a rear silencer (12) of a two-wheeled vehicle, especially a motorcycle, with an accommodation part (14) which can be fastened to a structural component of the two-wheeled vehicle and with which the rear silencer (12) is held, wherein the accommodation part (14) is a plastics-material part and wherein the accommodation part (14) is a functional component which performs functions which go beyond holding the rear silencer (12), **characterised in that** the accommodation part (14) is a helmet compartment.

2. A device (10) according to Claim 1, **characterised in that** the accommodation part (14) can be fastened to a frame structure of the two-wheeled vehicle.

3. A device (10) according to Claim 1 or Claim 2, **characterised in that** the accommodation part (14) has integrated air ducting.

4. A device (10) according to one of the preceding claims, **characterised in that** the accommodation part (14) has integrated cable and/or hose fastening means.

5. A device (10) according to one of the preceding claims, **characterised in that** the accommodation part (14) has shock-absorbing properties.

6. A device (10) according to one of the preceding claims, **characterised in that** the accommodation part (14) has at least one integrated fastening portion for fastening a further vehicle component.

7. A device (10) according to one of the preceding claims, **characterised in that** the accommodation part (14) has an integrated protective portion for protecting a further vehicle component.

8. A device (10) according to one of the preceding claims, **characterised in that** the accommodation part (14) has a V-shaped receptacle (16), preferably formed as a hollow profile, with an end portion (18) which is divided by a longitudinal cutout (20) and is penetrated by a transverse opening (22), with a plate-like fastening portion (24) of the rear silencer (12) with a hole (26) projecting into the longitudinal cutout (20), which portion is fastened to the receptacle with a fastening means, especially with a screw (34) and a nut (36), with preferably a bush (28) being inserted into the hole (26) of the fastening portion (24), into which bush in turn a rubber grommet (30) with a spacer piece (32) accommodated therein is inserted.

## Revendications

1. Dispositif (10) de réception d'un silencieux arrière (12) d'un véhicule à deux roues, en particulier d'une moto comprenant une pièce de réception (14) pouvant être fixée à un composant de structure du véhicule à deux roues et avec laquelle le silencieux d'extrémité (12) est maintenu, la pièce de réception (14) étant en un matériau synthétique et constituant un composant fonctionnel qui remplit, outre le maintien du silencieux arrière (12), des fonctions autres,
**caractérisé en ce que**
la pièce de réception (14) est un compartiment pour casque.

2. Dispositif (10) conforme à la revendication 1,
**caractérisé en ce que**
la pièce de réception (14) peut être fixée sur la structure du cadre du véhicule à deux roues.

3. Dispositif (10) conforme à la revendication 1 ou 2,
**caractérisé en ce que**
la pièce de réception (14) comprend des guidages d'air intégrés.

4. Dispositif (10) conforme à l'une des revendications précédentes,
**caractérisé en ce que**
la pièce de réception (14) comprend des fixations de cable et/ou de tuyaux intégrées.

5. Dispositif (10) conforme à l'une des revendications précédentes,
**caractérisé en ce que**
la pièce de réception (14) a des propriétés d'absorption des secousses.

6. Dispositif (10) conforme à l'une des revendications précédentes,
**caractérisé en ce que**
la pièce de réception (14) comprend au moins un segment de fixation intégré pour permettre la fixation d'un autre composant du véhicule.

7. Dispositif (10) conforme à l'une des revendications précédentes,
**caractérisé en ce que**
la pièce de réception (14) comporte un segment de protection intégré pour permettre de protéger un autre composant du véhicule.

8. Dispositif (10) conforme à l'une des revendications précédentes,
**caractérisé en ce que**
la pièce de réception (14) comprend un logement de réception en forme de V (16) de préférence réalisé sous la forme d'un profilé creux ayant un segment d'extrémité (18) qui est subdivisé par un évidement longitudinal (20) et est traversé par une ouverture transversale (22), dans l'évidement longitudinal (20) pénétrant un segment de fixation (24) en forme de plaque du silencieux arrière (12) équipé d'un perçage (26) qui est fixé au logement de réception par un moyen de fixation en particulier une vis (34) et un écrou (36), dans le perçage (26) du segment de fixation (24) étant de préférence logé un manchon (28) dans lequel est logée une douille en caoutchouc (30) équipée d'une pièce d'écartement (32) logée dans celle-ci.
